# EUROPEAN PATENT APPLICATION

(11) **EP 3 476 564 A1**
(43) Date of publication of application: **01.05.2019**
(21) Application number: 17782546.0
(22) Date of filing: 14.04.2017
(51) Int. Cl.: B29C 45/76, B22D 17/32, G06F 3/0488

(54) **DISPLAY OPERATION DEVICE AND MOLDING MACHINE**

(30) Priority: 14.04.2016 JP 2016081110
(71) Applicant: Toyo Machinery & Metal Co., Ltd., Akashi-shi, Hyogo 674-0091 (JP)
(72) Inventor: TARUYA, Koji, Hyogo 674-0091 (JP); HAYASHI, Yu, Hyogo 674-0091 (JP)
(74) Representative: Schön, Christoph
(86) International application number: PCT/JP2017/015397
(87) International publication number: WO 2017/179733

(57) **Abstract**

To provide a display operation device that can suppress unwanted operations and that can allocate a greater number of functions to a hardware operation switch while suppressing the number of hardware operation switches; and a molding machine that comprises the display operation device. [Solution] A display operation device 20 that has: a display part 21 that is overlapped by a touch panel 22; a control part 60 that displays a screw removal button 21d1 on the display part 21 and makes said button function, in combination with the touch panel 22, as a software operation switch; and a shared operation switch 56 that is a hardware operation switch. When the software operation switch generated by the combination of the touch panel 22 and the screw removal button 21d1 that is displayed on the display part 21 is tapped, the control part 60 dynamically allocates a screw removal function to the shared operation switch 56.

## Description

### BACKGROUND OF THE INVENTION

### Field of the Invention

The present invention relates to a display operation device comprised in a molding machine, such as an injection molding machine and a die-casting machine, and a molding machine comprising the display operation device.

### Background Art

Patent Literature 1 (JP2015-98136A) discloses a molding condition setup device as a display operation device comprised in an injection molding machine. The molding condition setup device comprises a display device and a plurality of electric operation keys which are hardware operation switches. The display device is provided with a display unit and a touch panel disposed overlapping the display unit, and an operation/support screen is displayed on the display unit and the operation is provided to the touch panel. The plurality of operation keys include various keys such as cursor keys and enter keys, and are laterally arranged in line at a lower edge of the display unit. In the molding condition setup device, molding conditions of the injection molding machine are set by providing the operation to the touch panel and the operation keys.

### SUMMARY OF INVENTION

### TECHNICAL PROBLEM

In a display operation device comprised in an injection molding machine, such as a molding condition setup device, for example, when an operation related to relatively important function, namely entering an input condition value or resetting all condition values, is made, a responsive press of the operation key with click feeling, not a non-responsive operation like a simple touch to the touch panel tends to be required. Therefore, configuration having many operations related to the important functions is required to have many operation keys.

However, increasing the number of operation keys, which are hardware operation switches, increases the number of mechanical elements, which may increase the failure rate or increase the size of the apparatus. In addition, since the operation keys are generally provided so as to protrude from the case or the like of the apparatus in order to improve the operability, the operation keys are inadvertently touched and the functions assigned to the operation keys are executed There was also the possibility that it would be.

The present invention has been made in view of the above-described problems, and an object of the present invention is to provide a display operation device which is capable of suppressing increase of hardware operation switches, allocating many functions to the hardware operation switches and preventing unintentional operation, and a molding machine comprising the same.

In order to achieve the object, a display operation device according to an aspect of the present invention is the display operation device comprised in a molding machine, comprising a display unit, a touch panel disposed overlapping the display unit, a control unit displaying images of operation switches on the display unit and functioning as software operation switches by combining with the touch panel, and a common operation switch as a hardware operation switch, wherein said control unit dynamically allocates functions corresponding to the software operation switches among the plurality of the functions to said common operation switch by providing the operations to said software operation switches.

According to the present invention, when an operation is input to a software operation switch based on a combination of a display unit and a touch panel, a function corresponding to the software operation switch among a plurality of functions of the molding machine is transmitted to the common operation switch Dynamically allocate. In this way, since the function is dynamically assigned to the shared operation switch which is the hardware operation switch by the operator operating the software operation switch, it is possible to assign a plurality of functions to the common operation switch. In addition, since the function is not assigned to the shared operation switch unless the software operation switch is operated, a plurality of operations are required to execute the function, and the function corresponding to the software operation switch is set by a single operation It can be suppressed from being executed.

In the present invention, it is preferable that the shared operation switch includes a light emitting element, and the control section causes the light emitting element of the common operation switch to emit light when the function corresponding to the software operation switch is assigned to the shared operation switch. In this way, it is possible to visually grasp that the function has been assigned to the common operation switch by operating the software operation switch.

The present invention further includes a normal operation switch which is a hardware operation switch to which one of a plurality of functions of the molding machine is assigned, and the control unit inputs an operation to the normal operation switch So that the function related to the normal operation switch among the plurality of functions possessed by the molding machine may be dynamically assigned to the shared operation switch. By doing so, it is also possible to assign functions related to the normal operation switch to the shared operation switch. Further, since the function is not assigned to the common operation switch unless the normal operation switch is operated, a plurality of operations are required to execute the function, and the function related to the normal operation switch is executed by a single operation can be suppressed.

In the present invention, it is preferable that the normal operation switch is a push button switch, and the control section dynamically switches the function related to the operation switch to the shared operation switch by pressing the normal operation switch a plurality of times Or may be allocated. By doing this, it is possible to further suppress the execution of the function related to the normal operation switch by a relatively simple operation.

In order to achieve the object, a molding machine according to another aspect of the present invention comprises the above-described display operation device and the molding device operating in response to the operation provided to the display operation device.

According to the present invention, since the display operation device is provided, the operator dynamically assigns the function to the shared operation switch which is the hardware operation switch by operating the software operation switch, so that the common operation Multiple functions can be assigned to the switch. In addition, since the function is not assigned to the shared operation switch unless the software operation switch is operated, a plurality of operations are required to execute the function, and the function corresponding to the software operation switch is set by a single operation It can be suppressed from being executed.

### Effect of Invention

According to the present invention, it is possible to allocate more functions to the hardware operation switch while suppressing an increase in the number of hardware operation switches, and to suppress an unintended operation.

### BRIEF DESCRIPTION OF THE DRAWINGS

Fig. 1 is a front view of an injection molding machine according to an embodiment of the present invention;
Fig. 2 is a front view of a display operation device comprised in the injection molding machine in Fig. 1;
Fig. 3 is a functional block diagram schematically illustrating the injection molding machine in Fig. 1;
Fig. 4 schematically illustrates an example that function included in a selected function group is allocated to a plurality of multi-function operation switches in the display operation device in Fig. 2; and
Fig. 5 schematically illustrates a use of a common operation switch of the display operation device in Fig. 2.

### DETAILED DESCRIPTION OF PREFERRED EMBODIMENT

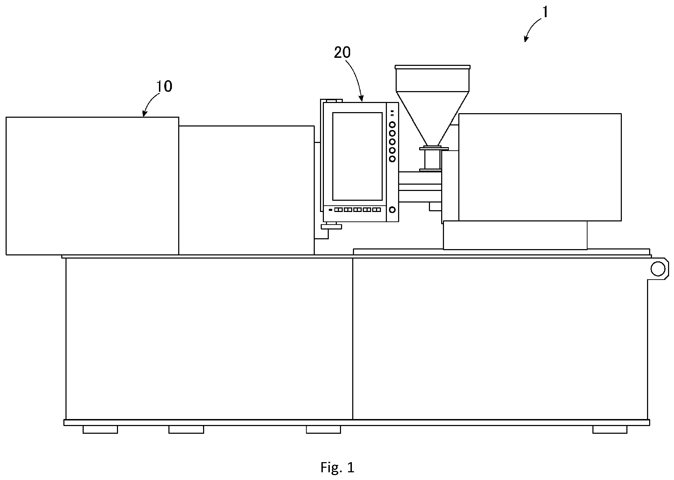

Hereinafter, a description will be made of an injection molding machine in accordance with an embodiment of the present invention with reference to the Figs. 1 to 5.

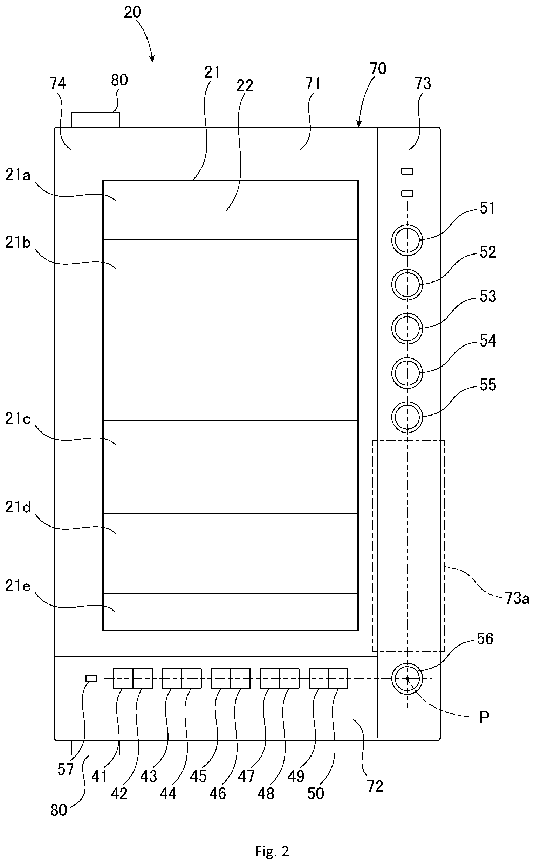

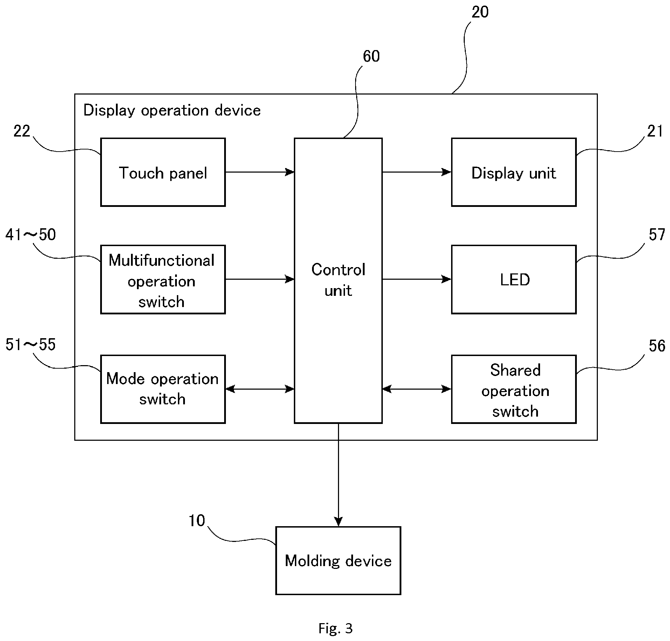

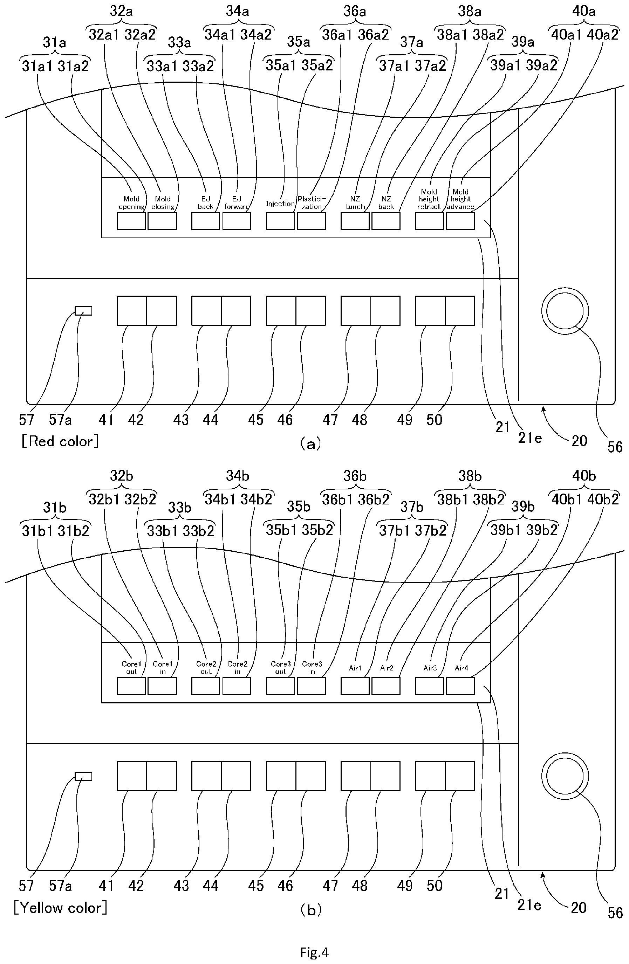

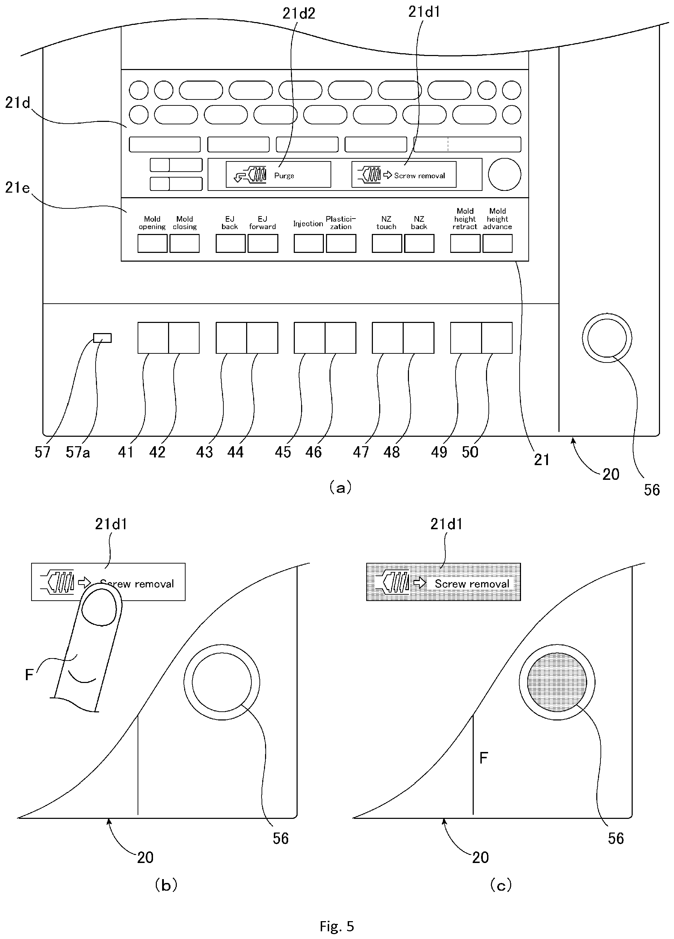

Fig. 1 is a front view of an injection molding machine according to an embodiment of the present invention. Fig. 2 is a front view of a display operation device comprised in the injection molding machine in Fig. 1. Fig. 3 is a functional block diagram schematically illustrating the injection molding machine in Fig. 1. Fig. 4(a) schematically illustrates an example that functions included in a first function group G1 are allocated to a plurality of multi-function operation switches in the display operation device in Fig. 2, and Fig. 4(b) schematically illustrates an example that functions included in a second function group G2 are allocated to a plurality of multi-function operation switches in the display operation device in Fig. 2. Fig. 5 schematically illustrates a use of a common operation switch of the display operation device in Fig. 2.

As shown in Fig. 1, the injection molding machine 1 comprises a molding device 10 and the display operation device 20.

The molding device 10, for example, comprises (1) a heating cylinder, (2) a screw rotatably and forward-backward movably stored in the heating cylinder, (3) a hopper provided at the end side of the heating cylinder and feeding raw material resin into a groove of the screw, (4) a clamping device provided at the tip side of the heating cylinder and provided with a mold, (5) a band heater for heating the heating cylinder, (6) a driving unit for rotating the screw, (7) a driving unit for forwardly-backwardly moving the screw, (8) a driving unit for opening and closing the mold, and ejecting molded products, (9) drivers for driving the driving units included in (1) to (8), (10) a sensor group for detecting various information related to the injection molding, and (11) a controller.

The controller of the molding device 10 is a function unit controlling operations of the overall molding device 10, and comprises a computer. The controller of the molding device 10 performs control of the overall molding steps, such as a plasticization operation, an injection operation, an opening and closing operation, an ejecting operation, and a series of the injection molding operations related to the injection molding, such as an processing/storing operation of a measured vale of the sensors, a determining operation of defective/non-defective products, and a processing/determining operation of an abnormality determining operation. The controller of the molding device 10 is communicably connected to a display operation device 20 which will be described hereinafter, and transmits various display information to the display operation device 20 and receives various function execution command information from the display operation device 20.

As shown in Figs. 2 and 3, the display operation device 20 comprises a display unit 21, a touch panel 22, multi-function operation switches 41 to 50 as some of the operation switches, mode operation switches 51 to 55 as the remaining operation switches, a common operation switch 56, a LED 57, a control unit 60, a case 70 and a rotating shaft unit 80.

The display unit 21 is configured to have a flat panel display such as a liquid crystal display and an organic EL display. The display unit 21 displays various information such as a value, an image and a graph, and images of various operation switches such as a key board, a ten key and operation buttons in response to display control information provided from a control unit 60 which will be described hereinafter. The display unit 21 is longitudinally arranged so as to locate at a center of a front part 71 of a case 70 also longitudinally provided.

As shown in Fig. 2, the display unit 21 has a display field which is divided into five fields, in order from a top, a monitor value display field 21a, a main screen field 21b, a sub-screen field 21c, an operation switch field 21d and a function label display field 21e.

The monitor value display field 21a, for example, displays various detection values related to the injection molding operation which are detected by the sensors of the molding device 10. The main screen field 21b displays various operation screens. The sub-screen field 21c displays screens such as figures of animations for supporting contents of the operation screens displayed on the main screen field 21b. The operation switch field 21d displays screens of the operation switches such as a slide switch and an operation button according to contents displayed on the main screen field 21b or the sub-screen field 21c. The function label display field 21e displays function labels showing functions allocated to the multi-function operation switches 41 to 50 so as to correspond to each multi-function operation switch 41 to 50. These examples are only examples, and the contents displayed on each display field may be another one, and division configuration of the display fields may be variable.

The touch panel 22 is disposed overlapping a display surface of the display unit 21. The touch panel 22 is provided with a touch operation by a user such as an operator. The touch operation includes a tap, namely a touch in a relative short time by an operation tool F such as a finger and a touch operation pen, a long tap, namely a touch in a relative long time by the operation tool F, flicking movement, namely a short and sudden swiping movement in a predetermined direction after touching the operation tool F, and swiping movement, namely to touch and move the operation tool F over the screen in a predetermined direction so as to slide the operation tool F. The control unit 60 which will be described hereinafter functions as a software operation switch by combining the image of the operation switch displayed on the display unit 21 with the touch panel 22.

The multi-function operation switches 41 to 50 are hardware operation switches, and in the present embodiment, pushbutton switches having rectangular shape with a front view are adopted. The hardware operation switch is the operation switch including a mechanical element, and may include the pushbutton switch, a toggle switch and a slide switch. The multi-function operation switches 41 to 50 are laterally arranged in line at a lower edge part 72 of the front part 71 of the case 70. In the present embodiment, there are twenty kinds of functions to be allocated to the multi-function operation switches 41 to 50, and these twenty kinds of functions are allocated to the first function group G1 and the second function group G2. The functions of these twenty kinds are mainly relatively important functions in the operations of driving unit of the molding device 10. The functions included in one function group selected from the first function group G1 and the second function group G2 is dynamically allocated to the multi-function operation switches 41 to 50.

The functions included in the first function group G1 are "mold opening", "mold closing", "EJ back", "EJ forward", "injection", "plasticization", "NZ forward", "NZ back", "mold height retract", and "mold height advance". When the first function group G1 is selected, these functions are allocated to the multi-function operation switches 41 to 50. A red color is correlated with the first function group G1.

The functions included in the second function group G2 are "core 1 out", "core 1 in", "core 2 out", "core 2 in", "core 3 out", "core 3 in", "are 1", "air 2", "air 3", and "air 4". When the second function group G2 is selected, these functions are allocated to the multi-function operation switches 41 to 50. A yellow color is correlated with the second function group G2.

The allocation of these functions is only an example, and the function to be included in each function group is optional. Furthermore, three or more function groups may be available. The number of the multi-function operation switch may be determined according to the configuration. Also, the number of the function included in each function group may be smaller than that of the multi-function operation switch, and in this case, there are the multi-function operation switches to which the functions are not allocated.

The mode operation switches 51 to 55 are hardware operation switches, and in the present embodiment, pushbutton switches having circular shape with a front view are adopted. The mode operation switches 51 to 55 are longitudinally arranged in line at a side edge part 73 of the front part 71 of the case 70. Light emitting elements are built in the mode operation switches 51 to 55, and the light emitting elements are turn on or off in response to lighting control information provided from the control unit 60 which will be described hereinafter. According to the present embodiment, the light emitting elements of the mode operation switches 51 to 55 are lighted on green. Functions for switching modes, in order from "OFF mode", "setup mode", "manual mode", "semi-automatic mode" and "automatic mode" are allocated to the mode operation switches 51 to 55.

The "OFF mode" is for suspending the operation of the molding device 10. When another mode is switched to the OFF mode, the operation of the molding device 10 is suspended. During the OFF mode, setting of the molding condition is made. The "setup mode" is for adjusting each operation from the mold opening to ejecting of the molded parts during one operation cycle, when the mold is changed or the screw is pulled out from the heating cylinder, and so on. In the "setup mode", each operation is made in a low pressure and a low speed. The "manual mode" is for manually carrying out the operations such as mold opening and closing of the molding device 10 by the multi-function operation switches 41 to 50. The "semi-automatic mode" is for suspending the operation cycle each one time. The "automatic mode" is full automatic operation mode for repeatedly producing the molded parts by repeating the operation cycle in a predetermined time.

The common operation switch 56 is the hardware operation switches, and in the present embodiment, the pushbutton switches having circular shape with a front view are adopted. The common operation switch 56 is arranged at a lower right part of the front part 71 of the case 70. Specifically, the common operation switch 56 is arranged at a point P on the front part 71 of the case 70 where a line of the multi-function operation switches 41 to 50 virtually extended in the lateral direction and a line of the mode operation switches 51 to 55 virtually extended in the longitudinal direction are crossed. The light emitting elements are built in the common operation switch 56, and the light emitting elements are turn on or off in response to lighting control information provided from the control unit 60 which will be described hereinafter. According to the present embodiment, the light emitting elements of the common operation switch 56 are lighted on green. The relatively important functions such as the functions related to the operation mode and to the operation of the driving unit of the molding device 10 are allocated to the common operation switch 56.

Regarding the functions allocated to the multi-function operation switches 41 to 50, the mode operation switches 51 to 55 and the common operation switch 56, the relatively less important functions is operated by combining the image of the operation switch such as the ten key or the operation button displayed on the display unit 21 with the touch panel 22. As one example, an input function of the molding condition value is relatively less important, and the input operation of the value is carried out by the software operation switch by combining the ten key displayed on the display unit 21 and the touch panel 22.

LED 57 is arranged in adjacent to the left side of the multi-function operation switch at the left end. The LED 57 comprises an emission unit 57a emittable in red and yellow. The emission unit 57a emits light in red or yellow in response to the lighting control information provided from the control unit 60 which will be described hereinafter.

The control unit 60 is a function unit is a function unit controlling operations of the overall display operation device 20, and comprises CPU, ROM, RAM and a computer having each interface. The control unit 60 performs display control operation of output image to the display unit 21 and operation processing provided to the touch panel 22, the multi-function operation switches 41 to 50, the mode operation switches 51 to 55 and the common operation switch 56. The control unit 60 receives each display information from the controller of the molding device 10, and output the display control information based on the display information to the display unit 21, and transmits the function execution command information provided to the touch panel 22, the multi-function operation switches 41 to 50, the mode operation switches 51 to 55 and the common operation switch 56 to the controller of the molding device 10.

The control unit 60 functions each function unit by executing control programs stored in the ROM by the CPU.

In other words, the control unit 60 displays the function labels showing the function included in the selected function group on the function label display field 21e at the lower part of the display unit 21 so as to correspond to the multi-function operation switches 41 to 50, respectively. The control unit 60 emits light at the emission unit 57a of the LED 57 so as to emit light in the predetermined color corresponding to the selected function group.

Specifically, when the first function group G1 is selected, as shown in Fig. 4(a), the control unit 60 displays the function labels 31a to 40a showing the function included in the first function group G1 on the function label display field 21e of the display unit 21, and the emission unit 57a of the LED 57 emits light in red. The function labels 31a to 40a comprises name part 31a1 to 40a1 and figure part 31a2 to 40a2, respectively. In this case, the control unit 60 allocates the functions included in the first function group G1 to the multi-function operation switches 41 to 50, respectively.

When the second function group G2 is selected, as shown in Fig. 4(b), the control unit 60 displays the function labels 31b to 40b showing the function included in the second function group G2 on the function label display field 21e of the display unit 21, and the emission unit 57a of the LED 57 emits light in yellow. The function labels 31b to 40b comprises name part 31b1 to 40b1 and figure part 31b2 to 40b2, respectively. In this case, the control unit 60 allocates the functions included in the second function group G2 to the multi-function operation switches 41 to 50, respectively.

The control unit 60 alternately switches the function group selected from the first function group G1 and the second function group G2 by right swiping or left swiping the lower part of the touch panel 22, which corresponds to the function label display field 21e.

The case 70 is formed like a box having a longitudinal rectangular shape with a front view, and the control unit 60 is stored inside of the same. A side edge part 73 at a right side of Fig. 2 of the front part 71 of the case 70 is provided with the mode operation switches 51 to 55 and the common operation switch 56 with an interval. Namely, a flat part 73a which is one part of the case 70 and extends in a strip-like shape in the longitudinal direction is arranged between mode operation switches 51 to 55 and the common operation switch 56 without the LED nor switches. The case 70 is made of metallic material or the resin material.

A rotating shaft unit 80 is provided at a side edge part 74 at a left side of Fig. 2 opposite to the side edge part 73 of the case 70. The rotating shaft unit 80 is attached to the molding device 10 and rotatably supports the case 70 around another side edge part 74 as the rotation shaft. The case 70 is rotated around the rotating shaft unit 80 with a hand placing on the flat part 73a of the case 70.

Hereinafter, a description will be made of operation examples when the multi-function operation switches 41 to 50, the mode operation switches 51 to 55 and the common operation switch 56 are used.

### (1) Mold opening by manual operation

The operator presses the mode operation switch 53 to which the function for switching function to "manual mode" is allocated. Thereby, the control units 60 turns on the light emitting elements of the operation switch 53, and switches to the "manual mode". When the first function group G1 is selected and the operator presses the multi-function operation switch 41 to which the function "mold opening" is allocated, the control unit 60 carries out the operation of the mold opening of the molding device 10 while pressing the multi-function operation switch 41.

### (2) Screw pulling out

The operator presses the mode operation switch 52 to which the function for switching function to "setup mode" is allocated. Thereby, the control units 60 turns on the light emitting elements of the operation switch 52, and switches to the "setup mode". At this time, as shown in Fig. 5(a), the control unit 60 displays a screw pulling out operation button 21d1 on the operation switch field 21d of the display unit 21. As shown in Fig. 5(b), the operator taps the software operation switch combining the screw pulling out operation button 21d1 and the touch panel 22 by the operation tool F. Then, as shown in Fig. 5(c), the control unit 60 changes a display color of the screw pulling out operation button 21d1 to a highlight display, and turns on the light emitting elements of the common operation switch 56 and allocates the screw pulling out function to the common operation switch 56. In this state, the operator presses the common operation switch 56. The control unit 60 processes the screw pulling out operation of the mold device 10 while pressing the common operation switch 56. A purge operation button 21d2 is operation in a similar manner as the screw pulling out operation button 21d1. Thus, "screw pulling out function" and "purge function" which is a part of the plurality of the functions of the molding device 10 are allocated to the common operation switch 56.

### (3) "semi-automatic mode" operation

When the operator presses the mode operation switch 54 once to which the function for switching function to "semi-automatic mode" is allocated, the control units 60 turns on the light emitting elements of the operation switch 54. When the mode operation switch 54 is pressed one more time, the control units 60 turns off the light emitting elements of the operation switch 54, and turns on the light emitting element of the common operation switch 56 and switches to the "semi-automatic mode". When the operator presses the common operation switch 56, the control unit 60 turns off the light emitting elements of the common operation switch 56, and turns on the light emitting element of the operation switch 54 and the operation cycle is executed in one cycle by the molding device 10. When the molding device 10 is suspended, the control unit 60 turns off the light emitting elements of the operation switch 54, and turns on the light emitting element of the common operation switch 56 and the operation is returned to a step of pressing the common operation switch 56. Thereafter, the control unit 60 executes the operation cycle in one cycle every one press of the common operation switch 56. Thus, the function related to the "semi-automatic mode" is allocated to the common operation switch 56.

### (4) "full-automatic mode" operation

When the operator presses the mode operation switch 55 once to which the function for switching function to "full-automatic mode" is allocated, the control units 60 turns on the light emitting elements of the operation switch 55. When the mode operation switch 55 is pressed one more time, the control units 60 turns off the light emitting elements of the operation switch 55, and turns on the light emitting element of the common operation switch 56 and switches to the "full-automatic mode". When the operator presses the common operation switch 56, the control unit 60 turns off the light emitting elements of the common operation switch 56, and turns on the light emitting element of the operation switch 55 and the operation cycle is executed in predetermined number of cycle by the molding device 10. When the molding device 10 is suspended, the control unit 60 turns off the light emitting elements of the operation switch 54, and turns on the light emitting element of the operation switch 51 and the operation mode is switched to "OFF mode".

As described above, according to the injection molding machine 1 of the present embodiment, an operation is input to a software operation switch (a screw removal operation button 21 d 1, a purge operation button 21 d 2, etc.) by a combination of the display unit 21 and the touch panel 22, The function corresponding to the software operation switch among the plurality of functions of the injection molding machine 1 is dynamically allocated to the shared operation switch 56. In this way, since the function is dynamically assigned to the shared operation switch 56 which is a hardware operation switch by operating the software operation switch by the operator, assigning a plurality of functions to the shared operation switch 56 You can do. In addition, since the function is not assigned to the common operation switch 56 unless the software operation switch is operated, a plurality of operations are required to execute the function, and the function corresponding to the software operation switch Can be suppressed from being executed.

In addition, the common operation switch 56 has a light emitting element, and when the control section 60 assigns the function corresponding to the software operation switch to the common operation switch 56, the light emitting element of the common operation switch 56 is caused to emit light. By doing this, it is possible to visually grasp that the function has been assigned to the common operation switch 56 by operating the software operation switch.

Further, it is preferable that a mode operation switch 54, which is a hardware operation switch to which the function of switching to the "semiautomatic mode" among the plurality of functions of the injection molding machine 1 is assigned, further includes a mode control switch , The operation start function of the "semiautomatic mode" is also dynamically assigned to the common operation switch 56. In this way, the function related to the mode operation switch 54 can also be assigned to the shared operation switch 56. In addition, since the function is not assigned to the common operation switch 56 unless the mode operation switch 54 is operated, a plurality of operations are required for executing the function, and the operation for starting the operation in the "semi-automatic mode" Can be suppressed from being executed. The same applies to the mode operation switch 55 to which the function of switching to "full automatic mode" is assigned.

In addition, the mode operation switch 54 is a pushbutton switch, and the control unit 60 dynamically allocates the operation start function of the "semi-automatic mode" to the common operation switch 56 by pressing the mode operation switch 54 twice. By doing this, it is possible to further suppress the execution of the operation start function of the "semi-automatic mode" by a relatively simple operation. The same applies to the mode operation switch 55.

According to the present invention, it is possible to allocate more functions to the hardware operation switch while suppressing an increase in the number of hardware operation switches, and to suppress an unintended operation.

In the above-described embodiment, one common operation switch 56 is provided, but the present invention is not limited thereto, and a configuration having a plurality of common operation switches may be adopted. In addition, only the function corresponding to the software operation switch may be assigned to the shared operation switch 56. In addition, by depressing the mode operation switch 54 once, the operation start function of "semi-automatic mode" may be assigned to the shared operation switch 56.

In the above-described embodiments, the injection molding machine which the resin material such as plastics is injected into the mold is disclosed, however the present invention is not limited thereto. Other than the injection molding machine, for example the mold machine for injecting the material of the molded parts into the mold such as a die-casting machine configured to press-feed the metallic material may be applicable. A machine tool other thank the molding machine is also applicable to the present invention.

The embodiments of the present invention is described above, however, the present invention is not limited thereto. Any addition, deletion and modification of the configuration elements, and combination of features of the embodiments are also included in a scope of the present invention.

## Claims

1. A display operation device comprised in a molding machine, comprising
a display unit,
a touch panel disposed overlapping said display unit,
a control unit displaying images of operation switches ono said display unit and functioning as software operation switches and putting said touch panel together, and
a common operation switch as a hardware operation switch, **characterized in that** said control unit dynamically allocates functions corresponding to the software operation switches among the plurality of the functions of said molding machine to said common operation switch by providing the operations to said software operation switches.

2. The display operation device according to claim 1, **characterized in that** said common operation switch has a light emitting elements, and the light emitting element of said common operation switch emits light when said control unit allocates the functions corresponding to said software operation switches to said common operation switch.

3. The display operation device according to claim 1 or claim 2 further comprising normal operation switches as the hardware operation switches to which one of the plurality of the functions of said molding machine, **characterized in that** said control unit dynamically also allocates functions related to the normal operation switches of the plurality of the functions of said molding machine to said common operation switches by providing the operations to said normal operation switches.

4. The display operation device according to claim 3, **characterized in that** said normal operation switches are press button switches, and the functions related to the operation switches are dynamically allocated to said common operation switches by pressing in plurality of times said normal operation switches.

5. The molding machine comprising a display operation device according to any one of claims 1 to 5, and a molding device operating in response to operations provided to said display operation device.
